(19)

Europäisches
Patentamt

European
Patent Office

Office européen
des brevets

(11)    EP 2 604 660 B1

(12)    **EUROPEAN PATENT SPECIFICATION**

(45) Date of publication and mention
of the grant of the patent:
**15.04.2015   Bulletin 2015/16**

(51) Int Cl.:
***C09D 1/00*** *(2006.01)*      ***C09D 4/00*** *(2006.01)*
***C09D 133/06*** *(2006.01)*

(21) Application number: **12196906.7**

(22) Date of filing: **13.12.2012**

(54) **Hard coating composition**

Hartbeschichtungszusammensetzung

Composition de revêtement dur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2011   KR 20110133373**

(43) Date of publication of application:
**19.06.2013   Bulletin 2013/25**

(73) Proprietors:
• **Samsung Electronics Co., Ltd
Gyeonggi-do 443-742 (KR)**
• **Industry-University Cooperation Foundation
Hanyang University
Seoul 133-791 (KR)**

(72) Inventors:
• **Jung, Yeon Kyoung
Seoul (KR)**
• **Kim, Kyung Kook
Gyeonggi-do (KR)**
• **Kim, Kyong Il
Seoul (KR)**
• **Kim, Joo Ho
Gyeonggi-do (KR)**
• **Koo, Sang Man
Seoul (KR)**
• **Kim, Jung Soo
Seoul (KR)**

• **Jung, Eun Gu
Chungcheongnam-do (KR)**

(74) Representative: **Taor, Simon Edward William et al
Venner Shipley LLP
200 Aldersgate
London EC1A 4HD (GB)**

(56) References cited:
• **Jeon, Seong Je; et al: "Hard coating films based
on organosilane-modified boehmite
nanoparticles under UV/thermal dual curing",
Thin Solid Films , vol. 516 2008, pages 3904-3909,
XP002695008, Retrieved from the Internet: URL:
http://hnp.hanyang.ac.kr/file/paper/15 .pdf
[retrieved on 2013-04-09]**
• **Sepeur, S. et al:: "UV curable hard coatings on
plastics", Thin solid films , vol. 351 2010, pages
216-219, XP002695009, Retrieved from the
Internet: URL:http://scidok.sulb.uni-
saarland.de/vol ltexte/
2010/2968/pdf/sm199938.pdf [retrieved on
2013-04-09]**
• **Nobel, M.L. et al:: "Waterborne nanocomposite
resins for automotive coating applications",
Progress in Organic Coatings , vol. 58, no. 2-3
February 2007 (2007-02), pages 96-104,
XP002695010, Retrieved from the Internet: URL:
http://www.sciencedirect.com/science/a
rticle/pii/S0300944006002578 [retrieved on
2013-04-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 604 660 B1

**Description**

Embodiments of the present disclosure relate to a hard coating composition, and more particularly, to a hybrid coating composition configured to be applicable on a surface of plastic material of household appliances.

The plastic material, such as, PMMA (polymethylmethacrylate), PET (polyethyleneterehthalate), and PC (polycarbonate) are being used because they are lightweight, provided with superior durability, and easily molded by heat. However, the plastic material is provided with low surface hardness, and due to the limit in the physical/chemical characteristic thereof poor abrasion resistance and solvent resistance, a wider use of the plastic material is limited.

As to resolve the difficulties as such, various types of functional hard coating material are being developed. Particularly, the development of the coating material using organic/inorganic hybrid material being produced through a sol-gel processing becoming mainstream.

A hard coating material may be an organic coating material using melamine, acryl, and urethane, an inorganic coating material using silicon-based material, or an organic/inorganic hybrid coating material that uses by combining inorganic-based material and organic-based material.

A coating composition that is composed of the inorganic material such as silicon material, when compared to the organic-based coating material, is provided with superior surface hardness and abrasion resistance. However, such a coating is associated with brittleness, and at the same time, a thick film coating may be difficult due to the generation of a crack such as an evaporation of a solvent in a drying process and a hardening process.

As to overcome the difficulty as such, a development of hybrid coating material that uses organic/inorganic material is taking place. However, the organic/inorganic hybrid coating material and the coating composition that may be used in coating of transparent plastic material are less sufficient in forming a coating layer having a satisfactory material characteristic, and since the hardness of the coating layer is low and the adhesion between the coating layer and the plastic substrate is low, making such as a product may be difficult.

Jeon, Seong Je; et al: "Hard coating films based on organosilane-modified boehmite nanoparticles under UV/thermal dual curing" discloses hard coating sols and films composed of boehmite nanoparticles modified with organosilanes, a formulated initiator, and an inorganic or organic cross-linker as an additive.

Sepeur, S; et al "UV curable hard coatings on plastics" discloses a curable hard coating material developed to improve the wear resistance of organic polymers.

Nobel, M.L. et al "Waterborne nanocomposite resins for automotive coating applications" discloses using organic acrylic polymers in aqueous dispersed form for the production of environmentally friendly coatings.

According to an aspect of the present invention, there is provided a hard coating composition according to claim 1.

According to a further aspect of the present invention, there is provided a product having a surface coated with a hard coating composition according to claim 10.

According to a further aspect of the present invention, there is provided a method of manufacturing a product according to claim 11.

According to a further aspect of the present invention, there is provided a method of manufacturing a hard coating composition according to claims 12 and 13.

Optional features are set out in the dependent claims.

Reference will now be made in detail to the embodiments, wherein like reference numerals refer to like elements throughout.

Inorganic nano particles of a hard coating composition in accordance with one embodiment may be obtained by performing a peptization after a hydrolysis of a metallic alkoxide, such as methoxide, ethoxide, isopropoxide, and butoxide, is performed in water.

In more detail, first, after obtaining a sediment in the form of a metallic hydrate having a cohesive form by performing a hydrolysis on a metallic alkoxide in an excess amount of water, and a strong acid such as a nitric acid or a hydrochloric acid is added to the sediment to perform a reaction for a number of hours at a temperature between 70° and 100°, preferably between 80° and 90°, so that a stable inorganic nano-sol having a size in nano units may be produced.

Most of the commercialized coating composition liquid having inorganic particle is used together with an organic binder, or is used in a manner to be dispersed in an organic solvent using a silane coupling agent.

In a case when a large amount of the organic binder is used, the content of the organic material is increased, and thus the surface hardness is reduced, and in a case when a reduced amount of the organic matter is used, since a dispersion may be difficult, the hard coating composition may not be used as a coating liquid, and thereby the production of hard coating material provided with superior surface hardness only by having a silica and a silane coupling agent is limited.

Thus, the hard coating composition in accordance with one embodiment, in order to produce a hard coating composition having higher hardness, is configured to use Boehmite, which is an inorganic nano particle, having higher surface hardness than the hardness of silica.

In this embodiment, a silane compound that is used on the modification of the surface of the inorganic nano particle is an alkoxy silane compound, and particularly, may be selected from an acrylic-based alkoxide silane compound or a vinyl-based alkoxy silane compound.

The Boehmite nano particle may be an acicular.

In this embodiment, the Boehmite nano particle is pre-processed by the acrylic-based alkoxide silane or the vinyl-based alkoxy silane , which are the organic silane coupling agents having an acrylic group and a vinyl group through a sol-gel method, so that hard coating liquid having an organic/inorganic nano particle hard coating composition liquid having superior dispersibility in organic solvent.

The coating composition as such, by the characteristic of the Boehmite having superior surface hardness, may be provided with an enhanced abrasion resistance when compared to silica, and may be provided with superior dispersibility with respect to the organic solution by a silane coupling agent.

The hybrid nano particle produced as such is provided with a structure of an Al-O-Si, and may form a coating film having high abrasion resistance after a hardening is performed.

In this embodiment, a, the reaction to perform a modification of the surface of the Boehmite with a silane compound is proceeded in the range of pH 3 and pH 5.

The electrical charge of the surface of the Boehmite particle, which is charged with a strong positive (+) charge in an acid state, is approached to 0 at the range of pH 6 to pH 7, in other words, the repulsive force on the surface of the Boehmite particle is reduced due to the loss of the electrical charge of the surface of the Boehmite particle, and thereby causing the cohesion of the sol.

That is, with respect to the Boehmite particle, since the partial positive charge of aluminum is shown at a relatively larger scale, in a case when a loss of the electrical charge of the surface is occurred, a nano-size particle has a tendency of showing a strong cohesion for stabilization as to recover the loss as such.

In addition, in a case when the surface of a particle is modified with an organic silane, and a sol-gel method is being used, and the sol-gel method requires a reaction under an acid state serving as catalysis reaction to promote a hydrolysis reaction and a condensation reaction.

A photo-hardening-type acrylate compound of a hard coating composition in accordance with one embodiment may be selected from an acrylate monomer, a urethane acrylate, a polyester acrylate, a polyether acrylate, and an acrylic acrylate. The acrylic compound, by performing a role as a cross-linking agent with respect to the modified particles, may be able to produce a further solid coating film, and in order to obtain the optimal coating layer, 10 to 65 weight parts of a modification particle and 35 to 90 weight parts of an acrylic-based monomer are required on a basis of 100 parts by weight of solid content of the coating liquid.

As for an initiator of a hard coating composition in accordance with one embodiment of the present disclosure, a polymerization initiator, which is configured to enable a hardening while forming a radical when an UV is radiated, is used, and the initiator may include a benzo-phenone type initiator, an acetone-phenone type initiator, a benzoin-ether type initiator, a benzyl-ketal type initiator, a thioctic-xanthone type initiator, and an anthraquinone type initiator ,and from the above initiators, the benzophenone, 1-hydroxy cyclohexyl phenyl ketone, and $\alpha$ - amino acetophenone may be used.

In this embodiment, an UV initiator, by forming a radical as a weak coupling is broken by an UV during a chemical combination of the initiator, enables a fast and solid hardening to take place. The content of the initiator to obtain an optimal coating film, on a basis of 100parts of solid content of the coating liquid, may be 3 to 10 weight parts, or preferably, 5 to 7 weight parts.

In addition, in this embodiment, alcohol is used as a solvent to disperse the coating liquid. The acrylic-based alkoxy silane or the organic silane, which are added in the present embodiment may be able to maintain the stability of the inorganic nano particle in accordance with the addition of the alcohol-like solvent. Thus, even when the composition of the solvent is changed, the stability of the particle is maintained. As for the ratio of the added alcohol, which is a solvent, the ratio of the solid content of a coating liquid and the alcohol is provided to be from 3:2 to 2:3 in terms of a weight ratio.

The coating liquid as such, in a case when being coated on the substrates of various materials, may be able to form a strong, colorless, and transparent coating film by silanol generated by the hydrolysis of the acrylic-based alkoxide silane compound, or by the functional group of an acryl group of the acrylic based compound.

In addition, by considering the miscibility with water and the drying speed after a coating, the alcohol may be used by selecting more than one type of alcohol from methane, ethanol, 1-propanol, and 2-propanol.

By adding a TEA (triethanolamine) to the coating liquid that is ultimately produced in the present embodiment, the coating liquid may be produced having various pHs.

As the pH is increased, the electrical charges of the surface of the Boehmite having an IEP (isoelectric point) at between 7 and 8 are reduced, and accordingly, the viscosity is enhanced. Through such, the thickness of the coating film may be controlled not only through an increase of the solid content but also through the controlling of the pH of the coating liquid without having to increase a solid content, the controlling of the Ph of the coating liquid also enabling the enhancement of the hardness.

As to secure the transparency and the convenience of a processing while enhancing a surface hardness, the pH of the coating liquid is preferred to be adjusted in the range between 4 and 6. Hence, in some embodiments of the invention, the pH of the coating liquid is adjusted to be in this range.

The substrates at which the hard coating composition in accordance with one embodiment of the present invention may be used in a useful manner include the substrates that are formed of glass, stainless steel, ceramics, aluminum, and plastic, and by applying a coating on the substrates as such using a spin coating method, a deep coating method, a flow coating method, and a spray coating method, a coating film having high hardness and transparency may be formed.

Hereinafter, the descriptions will be provided more in detail through the following embodiments and comparative examples.

Embodiments

Production of Boehmite Nano particle and Modification of Surface of Boehmite Nano Particle

Water of about 5L and aluminum isopropoxide of 2.45 mol are placed in a reactor and then stirred to obtain sediment that is hydrolyzed. Then, a nitrate of about 0.288 mol is added, and by gradually increasing the temperature, a peptization reaction is induced. While maintaining the pH in the range of 3.6 and 4.0, a reaction is performed for about 6 hours at a temperature of 90 degrees, and the Boehmite sol, which is opaque, is obtained. By stirring the Boehmite nano sol obtained as such, the Boehmite sol is evaporated under decompression to obtain Boehmite nano particles. As a result of the TEM analysis, the size of the Boehmite nano particle is provided with the size of several nanometers, while the compounded Boehmite is in match with the planes of the crystal lattice of each of (020), (120), (031), and (200) of a Boehmite phase of JCPDS (No. 31-1307) and is present in the form of a $\gamma$-AlOOH. Then, with respect to Boehmite nano particle obtained, distilled water of about 100mL and the Boehmite particle of about 83.33mmol are placed in a reactor, which is provided with a mechanical stirrer installed thereto, to produce the evenly dispersed Boehmite nano sol. Next, by adding the 3-(trimethoxysilyl) propyl methacrylate of about 47.34mmol and the triethoxyvinylsilane of about 12-34mmol to the dispersed liquid, and the temperature is increased to about 70 ° to induce the hydrolysis and the condensation reaction between the Boehmite and the organic silane for about 30 minutes, and thus sediment that is agglomerated at an inside the reactor is obtained. The sediment as such is formed by the lipophilic characteristic of the acrylate in water, and after the completion of the reaction, the Boehmite particle, which is surface-modified with an organic silane, is ultimately obtained by a filter apparatus.

Embodiments 1 to 4

A 60% solution is produced by dispersing the Boehmite particle, which is grafted with an organic group produced as above, and an acrylate compound (SC2153) in isopropyl alcohol at a weight ratio of 45:55. Then, by adding 7 weight parts of 1-hydroxy cyclohexyl phenyl ketone (IRG-184) as an UV initiator with respect to the solid content, a coating liquid is produced. After then, by adding a triethanolamine at about 0.5 to 3 weight parts, final coating liquids having pHs of 4, 4.5, 5, and 5.5 are produced

Comparative Example 1

Except that a 40% solution, which is provided with the surface-modified Boehmite particle and the acrylate compound dispersed isopropyl alcohol at the weight ratio of 50:50, is used, the comparison is performed using the same methods the above embodiments 1 to 4.

Comparative Example 2

Except that a 50% solution, which is provided with the surface-modified Boehmite particle and the acrylate compound dispersed in isopropyl alcohol at the weight ratio of about 50:50, is used, the comparison is performed using the same methods the above embodiments 1 to 4.

The components of the coating composition produced at the embodiments and the comparative examples are shown on the Table 1 below:

Table 1

| Category | Modified Inorganic Particle | Acrylic-based Compound | Initiator | Organic Solvent | pH |
|---|---|---|---|---|---|
| Embodiment 1 | 0.9g | 1.1g | 0.14g | 1.3g | 4 |
| Embodiment 2 | 0.9g | 1.1g | 0.14g | 1.3g | 4.5 |

(continued)

| Category | Modified Inorganic Particle | Acrylic-based Compound | Initiator | Organic Solvent | pH |
|---|---|---|---|---|---|
| Embodiment 3 | 0.9g | 1.1g | 0.14g | 1.3g | 5 |
| Embodiment 4 | 0.9g | 1.1g | 0.14g | 1.3g | 5.5 |
| Comparative Example 1 | 1.0g | 1.0g | 0.14g | 3.0g | 3.5 |
| Comparative Example 2 | 1.0g | 1.0g | 0.14g | 2.0g | 3.5 |

With respect to the coating composition, a PMMA panel, which is provided with the width and the length thereof at about 5 cm each, is thoroughly cleaned with Isopropyl Alcohol for the coating composition to be applied thereon, and through a spin coating method, a coating film is produced, and an UV hardening is performed after a natural drying process of about 10 minutes. After the completion of the above, the physical properties of the coating film is evaluated as follows:

Transmittance /Haze

By using a Hazemeter (NDH-5000), the total transmittance and a haze of a coating sample are measured.

Transmittance (T) ○: T≥90%, Δ: 75%≤T ⟨90%,X:T ⟨75%

Haze (H) ○: H≤2%, Δ: 2% ⟨H ≤5%, X: 5% ⟨H

Pencil Hardness

The pencil hardness is measured by inserting a pencil, which is prepared for a hardness measurement, into a pencil hardness tester (QM450A) at a 45-degree angle, and by applying a certain weight (0.5kg) on the coating film that is formed on the PMMA substrate. As for the pencils, Mitsubishi® pencils having the strengths of H-9H, F, HB, and B-6B are used. The hardness of the lead of each pencil producing no scratch after three attempts is measured.

Adhesiveness

With respect to the adhesiveness test, a cross-cut test is used. By using a cross cutter, the coating film having the width and length of about 10mm is divided into 10x10 sections while each of the 100 sections is provided with the width about 1mm, and the length of about 1mm. Then, on the total of 100 sections, a strip of 3M® scotch tape is placed and closely adhered by use of a hand. Next, the strip of 3M® scotch tape is removed instantly from the 100 sections in a perpendicular direction to the direction of the strip of 3M® scotch tape is placed on the 100 sections. At this time, by measuring the number of the rectangular sections that remain on the coating layer, the adhesiveness is evaluated.

$$\text{Adhesiveness} = \text{Number of Remaining Rectangular Sections}/100$$

Abrasion Resistance

With respect to the evaluation of the abrasion resistance, a printing abrasion tester is used. After fixing the coating layer sample to a tester, a friction ruler having a diameter of about 28mm is wrapped with a cotton cloth, and while applying a weight of about 2kg on the friction ruler, the abrasion is performed for about 2,000 times at the frequency of about 45 round trips in a minute. After the above process, the surface is investigated.

○: No trace of peeling or abrasion, : Minor abrasion occurred, X: Peeling of coated surface occurred

The physical properties of the coating film that is produced according to the embodiments 1 to 4 as well as the comparative examples 1 and 2 are as follows:

Table 2

| Category | Transmittance | Haze | Pencil Hardness | Adhesiveness | Abrasion Resistance |
|---|---|---|---|---|---|
| Embodiment 1 | ○ | ○ | 7H | 100/100 | ○ |
| Embodiment 2 | ○ | ○ | 8H | 100/100 | ○ |
| Embodiment 3 | ○ | ○ | 9H | 100/100 | ○ |
| Embodiment 4 | ○ | ○ | 9H | 100/100 | ○ |
| Comparative Example 1 | ○ | ○ | 5H | 100/100 | ○ |
| Comparative Example 2 | ○ | ○ | 6H | 100/100 | ○ |

As discussed above, embodiments of the invention provide a hard coating composition, comprising: a surface-modified Boehmite nano particle of 5 to 50 weight %; a photo-hardening-type acrylate compound of 10 to 50 weight %; an organic solvent of 30 to 70 of weight %; and a photo-initiator of 1 to 10 weight %.

The properties of the hard coating composition are further improved when the hard coating composition is provided with a pH thereof between 4 to 6.

The surface of the Boehmite nano particle may be modified with an alkoxy silane compound, and the alkoxy silane compound comprises at least one of an acrylic-based alkoxy silane compound and a vinyl-based alkoxy silane compound.

The photo-hardening-type acrylate compound may comprise at least one of acrylate monomer, urethane acrylate, polyester acrylate, polyether acrylate, and acrylic acrylate.

The organic solvent may comprise at least one of methanol, ethanol, isopropanol, normal-propanol, butanol, isobutanol, ethyl-cellosolve, methyl-cellosolve, butyl-cellloslove, butyl-acetate, diacetone alcohol, methyl-ethyl ketone, propylene glycol, isopropyl alcohol, and ethylene-glycol isopropyl alcohol.

The photo-initiator may comprise at least one type of a benzo-phenone type, an acetone-phenone type, a benzoin-ether type, benzyl-ketal type, a thioctic-xanthone type, and an anthraquinone type.

The hard coating composition may comprise a surface improving material or an anti-static material.

The pH may be controlled through the use of at least one of monoethanolamine, diethanolamine, and triethanolamine.

In some embodiments, the Boehmite nano particle may be acicular. In some embodiments, the Boehmite nano particle may have a size from 1 nm to 20 nm.

The surface modification of the Boehmite nano particle may be performed at a temperature between 60° and 80°.

In some embodiments, when the surface of the Boehmite nano particle is being modified, the pH of the solvent having the dispersed Boehmite nano particle may be controlled at between 3 and 5.

Embodiments of the invention also provide a product having a surface coated with a hard coating composition, the hard coating composition being according to any of the above mentioned embodiments.

Embodiments of the invention also provide a method of manufacturing a product, comprising coating the surface of the product using a hard coating composition, wherein the hard coating composition is according to any of the above mentioned embodiments.

## Claims

1.   A hard coating composition, comprising:

a surface-modified Boehmite nano particle of 5 to 50 weight %;
a photo-hardening-type acrylate compound of 10 to 50 weight %;
an organic solvent of 30 to 70 of weight %; and
a photo-initiator of 1 to 10 weight %,
wherein the hard coating composition has a pH thereof between 4 to 6.

2.   The hard coating composition of claim 1, wherein:

a surface of the Boehmite nano particle is modified with an alkoxy silane compound, and
the alkoxy silane compound comprises at least one of an acrylic-based alkoxy silane compound and a vinyl-based alkoxy silane compound.

3. The hard coating composition of any one of claims 1 or 2, wherein:

the photo-hardening-type acrylate compound comprises at least one of acrylate monomer, urethane acrylate, polyester acrylate, polyether acrylate, and acrylic acrylate.

4. The hard coating composition of any one of claims 1 to 3, wherein:

the organic solvent comprises at least one of methanol, ethanol, isopropanol, normal-propanol, butanol, isobutanol, ethyl-cellosolve, methyl-cellosolve, butyl-cellloslove, butyl-acetate, diacetone alcohol, methyl-ethyl ketone, propylene glycol, isopropyl alcohol, and ethylene-glycol isopropyl alcohol.

5. The hard coating composition of any one of claims 1 to 4, wherein:

the photo-initiator comprises at least one type of a benzo-phenone type, an acetone-phenone type, a benzoin-ether type, benzyl-ketal type, a thioctic-xanthone type, and an anthraquinone type.

6. The hard coating composition of any one of claims 1 to 5, further comprising:

an anti-static material.

7. The hard coating composition of any one of claims 1 to 6, wherein:

the pH is controlled through the use of at least one of monoethanolamine, diethanolamine, and triethanolamine.

8. The hard coating composition of any one of claims 1 to 7, wherein:

the Boehmite nano particle is acicular.

9. The hard coating composition of any one of claims 1 to 8, wherein:

the Boehmite nano particle has a size from 1nm to 20nm.

10. A product having a surface coated with a hard coating composition, the hard coating composition being according to any one of claims 1 to 9.

11. A method of manufacturing a product, comprising:

coating the surface of the product using a hard coating composition, wherein the hard coating composition is according to any one of claims 1 to 9.

12. A method of manufacturing a hard coating composition of any one of claims 1 to 9, the method of manufacturing the hard coating composition comprising performing the surface modification of the Boehmite nano particle at a temperature between 60°C and 80°C.

13. A method of manufacturing a hard coating composition of any one of claims 1 to 9, the method of manufacturing the hard coating composition comprising controlling the pH of the solvent having the dispersed Boehmite nano particle between 3 and 5, when the surface of the Boehmite nanoparticle is being modified.

**Patentansprüche**

1. Hartbeschichtungszusammensetzung, die Folgendes umfasst:

ein oberflächenmodifiziertes Böhmit-Nanopartikel zu 5 bis 50 Gew.-%;
eine Acrylatverbindung vom Photohärtungstyp zu 10 bis 50 Gew.-%;
ein organisches Lösungsmittel zu 30 bis 70 Gew.-%; und

einen Photoinitiator zu 1 bis 10 Gew.-%;
wobei die Hartbeschichtungszusammensetzung einen pH-Wert davon zwischen 4 und 6 hat.

2. Hartbeschichtungszusammensetzung nach Anspruch 1, wobei:

eine Oberfläche des Böhmit-Nanopartikels mit einer Alkoxysilanverbindung modifiziert ist und
die Alkoxysilanverbindung eine acrylbasierte Alkoxysilanverbindung und/oder eine vinylbasierte Alkoxysilanverbindung umfasst.

3. Hartbeschichtungszusammensetzung nach einem der Ansprüche 1 oder 2, wobei:

die Acrylatverbindung vom Photohärtungstyp ein Acrylatmonomer, Urethanacrylat, Polyesteracrylat, Polyetheracrylat und/oder Acrylacrylat umfasst.

4. Hartbeschichtungszusammensetzung nach einem der Ansprüche 1 bis 3, wobei:

das organische Lösungsmittel Methanol, Ethanol, Isopropanol, normales Propanol, Butanol, Isobutanol, Ethyl-Cellosolve, Methyl-Cellosolve, Butyl-Cellosolve, Butylacetat, Diacetonalkohol, Methylethylketon, Propylenglykol, Isopropylalkohol und/oder Ethylenglykol-Isopropylalkohol umfasst.

5. Hartbeschichtungszusammensetzung nach einem der Ansprüche 1 bis 4, wobei:

der Photoinitiator mindestens einen Typ eines Benzophenon-Typs, eine Acetonphenon-Typs, eines Benzoinether-Typs, Benzylketal-Typs, eines Thioctsäurexanthon-Typs und eines Anthrachinon-Typs umfasst.

6. Hartbeschichtungszusammensetzung nach einem der Ansprüche 1 bis 5, die weiterhin Folgendes umfasst:

ein antistatisches Material.

7. Hartbeschichtungszusammensetzung nach einem der Ansprüche 1 bis 6, wobei:

der pH-Wert durch die Verwendung von Monoethanolamin, Diethanolamin und/oder Triethanolamin gesteuert wird.

8. Hartbeschichtungszusammensetzung nach einem der Ansprüche 1 bis 7, wobei:

das Böhmit-Nanopartikel nadelförmig ist.

9. Hartbeschichtungszusammensetzung nach einem der Ansprüche 1 bis 8, wobei:

das Böhmit-Nanopartikel eine Größe von 1 nm bis 20 nm hat.

10. Produkt mit einer Oberfläche, die mit einer Hartbeschichtungszusammensetzung beschichtet ist, wobei die Hartbeschichtungszusammensetzung nach einem der Ansprüche 1 bis 9 ist.

11. Verfahren zur Herstellung eines Produkts, wobei das Verfahren Folgendes umfasst:

Beschichten der Oberfläche des Produkts unter Verwendung einer Hartbeschichtungszusammensetzung, wobei die Hartbeschichtungszusammensetzung nach einem der Ansprüche 1 bis 9 ist.

12. Verfahren zur Herstellung einer Hartbeschichtungszusammensetzung nach einem der Ansprüche 1 bis 9, wobei das Verfahren zur Herstellung der Hartbeschichtungszusammensetzung das Durchführen der Oberflächenmodifizierung des Böhmit-Nanopartikels bei einer Temperatur zwischen 60 °C und 80 °C umfasst.

13. Verfahren zur Herstellung einer Hartbeschichtungszusammensetzung nach einem der Ansprüche 1 bis 9, wobei das Verfahren zur Herstellung der Hartbeschichtungszusammensetzung das Steuern des pH-Werts des Lösungsmittels mit dem dispergierten Böhmit-Nanopartikel zwischen 3 und 5 umfasst, wenn die Oberfläche des Böhmit-Nanopartikels modifiziert wird.

**Revendications**

1. Composition de revêtement dur, comprenant :

    une nanoparticule de boehmite à surface modifiée comprise entre 5 et 50 % en poids ;
    un composé acrylate de type photodurcissant compris entre 10 et 50 % en poids ;
    un solvant organique compris entre 30 et 70 % en poids ;
    et un photo-initiateur compris entre 1 et 10 % en poids, la composition de revêtement dur ayant un pH compris entre 4 et 6.

2. Composition de revêtement dur selon la revendication 1, dans laquelle :

    une surface de la nanoparticule de boehmite est modifiée par un composé alcoxysilane, et
    le composé alcoxysilane comprend au moins l'un parmi un composé alcoxysilane à base d'acrylique et un composé alcoxysilane à base de vinyle.

3. Composition de revêtement dur selon l'une quelconque des revendications 1 ou 2, dans laquelle :

    le composé acrylate de type photodurcissant comprend au moins l'un parmi un monomère acrylate, un acrylate d'uréthane, un acrylate de polyester, un acrylate de polyéther, et un acrylate acrylique.

4. Composition de revêtement dur selon l'une quelconque des revendications 1 à 3, dans laquelle :

    le solvant organique comprend au moins l'un parmi le méthanol, l'éthanol, le propan-2-ol, le propan-1-ol, le butanol, le 2-méthylpropan-1-ol, l'éthyl Cellosolve, le méthyl Cellosolve, le butyl Cellosolve, l'acétate de butyle, la 4-hydroxy-4-méthylpentan-2-one, la méthyléthylcétone, le propylèneglycol, le propan-2-ol, et l'éthylène glycol propan-2-ol.

5. Composition de revêtement dur selon l'une quelconque des revendications 1 à 4, dans laquelle :

    le photo-initiateur comprend au moins un type parmi un type benzophénone, un type acétophénone, un type éther de benzoïne, un type benzylcétal, un type xanthone-acide thioctique et un type anthraquinone.

6. Composition de revêtement dur selon l'une quelconque des revendications 1 à 5, comprenant en outre : un agent antistatique.

7. Composition de revêtement dur selon l'une quelconque des revendications 1 à 6, dans laquelle :

    le pH est régulé au moyen d'au moins l'une parmi une monoéthanolamine, une diéthanolamine, et une triéthanolamine.

8. Composition de revêtement dur selon l'une quelconque des revendications 1 à 7, dans laquelle : la nanoparticule de boehmite est aciculaire.

9. Composition de revêtement dur selon l'une quelconque des revendications 1 à 8, dans laquelle : la nanoparticule de boehmite a une dimension comprise entre 1 nm et 20 nm.

10. Produit ayant une surface revêtue par une composition de revêtement dur, la composition de revêtement dur étant selon l'une quelconque des revendications 1 à 9.

11. Procédé de fabrication d'un produit, consistant à :

    revêtir la surface du produit au moyen d'une composition de revêtement dur, la composition de revêtement dur étant selon l'une quelconque des revendications 1 à 9.

12. Procédé de fabrication d'une composition de revêtement dur selon l'une quelconque des revendications 1 à 9, le procédé de fabrication de la composition de revêtement dur consistant à modifier la surface de la nanoparticule de boehmite à une température comprise entre 60 °C et 80 °C.

13. Procédé de fabrication d'une composition de revêtement dur selon l'une quelconque des revendications 1 à 9, le procédé de fabrication de la composition de revêtement dur consistant à réguler le pH du solvant contenant la nanoparticule de boehmite dispersée entre 3 et 5, lorsque la surface de la nanoparticule de boehmite est modifiée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JEON, SEONG JE et al.** *Hard coating films based on organosilane-modified boehmite nanoparticles under UV/thermal dual curing*

- **SEPEUR, S et al.** *UV curable hard coatings on plastics*
- **NOBEL, M.L. et al.** *Waterborne nanocomposite resins for automotive coating applications*